# EUROPEAN PATENT APPLICATION

(11) **EP 1 464 880 A1**
(43) Date of publication of application: **06.10.2004**
(21) Application number: 04101290.7
(22) Date of filing: 29.03.2004
(51) Int. Cl.: F16K 27/00, F15B 13/00

(54) **Pneumatic valve bank with a label area**

(30) Priority: 31.03.2003 DE 10314430
(71) Applicant: Bosch Rexroth Teknik AB, 125 81 Stockholm (SE)
(72) Inventor: Öhrman, Daniel, 16938 Solna (SE)
(74) Representative: Kietzmann, Lutz

(57) **Abstract**

The present invention relates to a pneumatic valve bank comprising several multiway valves (1a to 1d) arranged to one another, at least one inner common supply channel (11), and at least one inner common exhaust channel (12) for supplying and discharging air to/from the multiway valves (1a to 1d) and at least one connecting unit (2a, 2b) for connecting the multiway valves (1a to 1d) with electric and/or pneumatic sources,
wherein a label area (8) is arranged at the housing (9) of said connecting unit (2a, 2b), the label area (8) comprises at least one through-going opening (10) shaped as a character, a symbol and/or a sign, wherein said opening (10) correspond with the at least one inner exhaust channel (12) for discharging air to the atmosphere.

## Description

The present invention relates to a pneumatic valve bank comprising several multiway valves arranged to one another, at least one inner common supply channel and at least one inner common exhaust channel for supplying and discharging air to/from the multiway valves, and at least one connecting unit for connecting the multiway valves with electric and/or pneumatic sources.

### Description of the related art

A valve bank according to the preamble of claim 1 is known from the catalogue "Know-How in Pneumatics" (No.: 00010 006 01, dated 01.09.1998, page 6.105). The valve bank comprises several fluid manifold elements which are connected to respective V-shaped multiway valves. Each multiway valve comprises an electrical pilot valve for controlling the inner valve mechanism of the multiway valve by a control pressure. The multiway valves have a 5/2- or 5/3-valve function. The fluid manifold elements and its multiway valves are arranged to one another wherein the manifold elements form a common supply channel and two common exhaust channels for all multiway valves extending lengthwise through all manifold elements. A last multiway valve with its fluid manifold element is followed by a similarly shaped entry plate which serves as a kind of connecting unit for connecting the valve bank with pneumatic sources. Therefore, the connecting unit corresponds with the supply channel and both exhaust channels.

A push-in fitting is arranged at the housing of the connecting unit forming a supply port. Furthermore, two silencers are disposed on respective exhaust ports, which are arranged next to the supply port of the connecting unit in order to exhaust discharged air to the atmosphere in a noise-reduced manner.

Since the free area which is available at the housing of the connecting unit is limited it is difficult to place all push-in fittings, all silencers and all other parts at the housing. Furthermore, it is difficult to find a central visible area on a valve bank for arranging the logotype of the manufacturer or the retailer of the valve bank.

It is an object of the invention to provide a valve bank which offers in contrast to the prior art enough free area for placing all necessary parts - especially a logotype - without increasing the dimensions of the valve bank.

### Summary of the invention

The object is obtained in a valve bank of the above mentioned kind by using the features of the characterising portion of claim 1. Thus the invention provides a label area which is arranged at the housing of the connecting unit, the label area comprises through-going openings shaped as at least one character, symbol and/or sign, wherein said openings correspond with the at least one inner exhaust channel for discharging air to the atmosphere.

This space-saving solution integrates the exhaust port with the requirement to place a logotype or similar means on the valve bank. Thus it is possible to conduct the discharged air through the characters of a company name, e.g. REXROTH.

Advantageously, the label area is arranged on a separate cover plate as a part of the housing which is mounted at the housing with at least one screw or a snap connection. It is also possible to arrange the label area on the main body of the connecting unit.

According to another advantageous aspect of the invention an additional built-in silencer element is arranged below the label area in order to absorb the noise caused by the discharged air. Thus it is possible to completely integrate the silencer in the housing of the connection unit.

The connecting unit might be an electronical control unit for controlling the electromagnetic pilot valves of the multiway valves or an air pipe connecting box or comprises both functional parts in a common unit.

Advantageously, the connecting unit is arranged on at least one front side of the valve bank as a kind of end unit for sealing-off the channels extending lengthwise through the valve bank. It is also possible to arrange the connecting unit as a kind of sandwich unit between two multiway valves.

In a preferred embodiment of the invention all multiway valves are connected to individual fluid manifolds comprising a central supply channel and two exhaust channels extending lengthwise through all fluid manifolds. However, it is also possible to use the invention in connection with a valve bank without a separate fluid manifold. In this case the common channels extend directly through the main body of the multiway valves. Moreover, a common fluid manifold for all multiway valves is possible.

In order to achieve a simple manufacturing process of the connecting unit according to the present invention the housing of the connecting unit together with the optionally cover plate should be made of plastics material formed by injection moulding or another suitable manufacturing process.

The foregoing and other aspects will become apparent from the following detailed description of the invention when considered in conjunction with the enclosed drawing.

### Brief description of the drawing

- Figure 1: shows a pneumatic valve bank with two connecting units having a label area according to the present invention, and
- Figure 2: shows one of both connecting units according to Figure 1 in detail.

### Description of the preferred embodiment

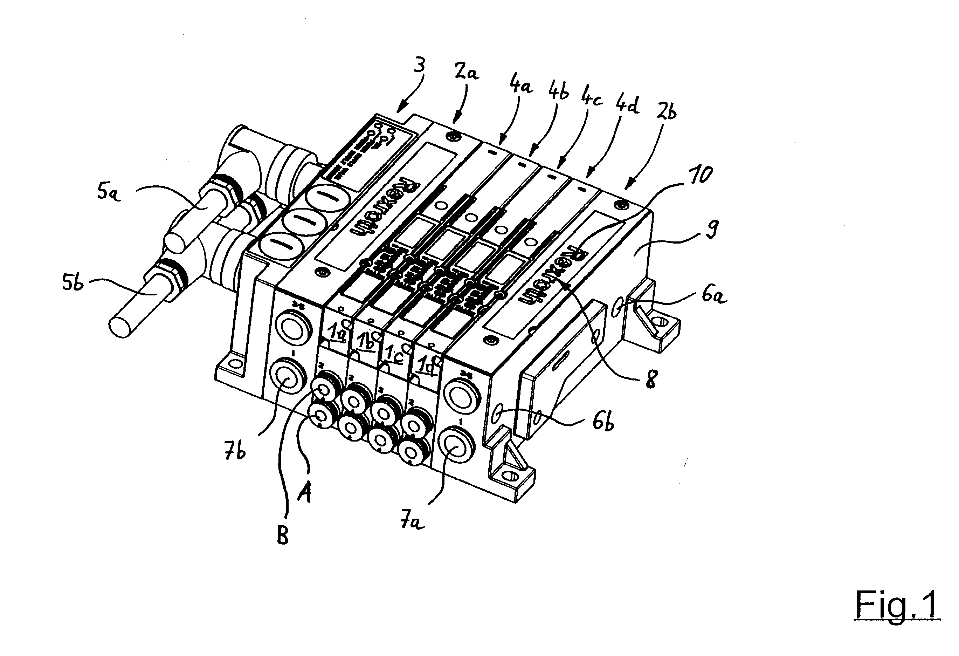

The valve bank as shown in Figure 1 comprises four multiway valves 1a to 1d with upper individual fluid manifolds arranged one to another in a manner that adjacent multiway valves are stacked with their major sides together. The two last multiway valves 1a and 1d are followed by similarly shaped connecting units 2a and 2b respectively. Furthermore, a control unit 3 is arranged next to the connecting unit 2a. The control unit 3 provides an electrically connection to electromagnetic pilot valves 4a to 4d of the respective multiway valves 1a to 1d in order to control said multiway valves 1a to 1d. The control unit 3 is connected with a - not shown - central control unit via electrical cables 5a and 5b. The multiway valves 1a to 1d, the connecting units 2a and 2b and the control unit 3 are clamped together by two tie rods 6a and 6b, which extend through all said parts. Thus, the overall valve bank processes a compact block-like form.

The multiway valves 1a to 1d are connected to one another in order to form at least one common - but not visible - inner supply channel and at least one common inner exhaust channel extending lengthwise through the upper individual fluid manifolds of multiway valves 1a to 1d. The integrated supply channel is connected with supply ports 7a and 7b arranged on a side surface of the connecting units 2a and 2b. Said supply ports 7a and 7b are equipped with push-in fittings in order to connect an air source to the supply ports 7a and 7b via air conduits. On the respective side surfaces of the upper fluid manifolds of each multiway valve 1a to 1d two delivery ports A and B are arranged.

Furthermore, a label area 8 is arranged at the housing 9 of the connecting units 2a and 2b. The label area 8 comprises several through-going openings 10 shaped as the characters of the logotype "REXROTH". These openings 10 correspond with the at least one inner exhaust channel for discharging air to the atmosphere.

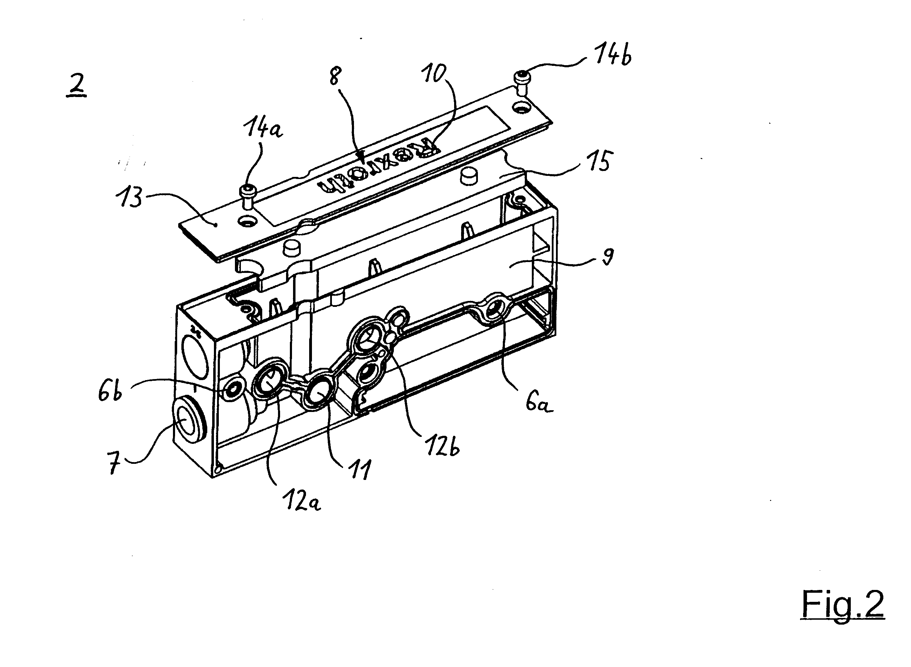

According to Figure 2 each connecting unit 2 comprises a section of a supply channel 11, and two sections of exhaust channels 12a and 12b for supplying and discharging air to/from the - not shown - multiway valves 1a to 1d. Both exhaust channels 12a and 12b correspond with the openings of the label area 8 for discharging air to the atmosphere.

The label area 8 is arranged on a separate cover plate 13 as a part of the housing 9 which is attached to the housing 9 with two screws 14a and 14b. A built-in silencer element 15 is arranged below the label area 8 of the cover plate 13 in order to absorb the noise causes by the discharging air.

### Reference Signs

- 1: multiway valve
- 2: connection unit
- 3: control unit
- 4: pilot valve
- 5: electrical cable
- 6: tie rod
- 7: supply port
- 8: label area
- 9: housing
- 10: openings
- 11: supply channel
- 12: exhaust channel
- 13: cover plate
- 14: screw
- 15: silencer element

- A: delivery port
- B: delivery port

## Claims

1. A pneumatic valve bank comprising several multiway valves (1a to 1d) arranged to one another, at least one inner common supply channel (11) and at least one inner common exhaust channel (12) for supplying and discharging air to/from the multiway valves (1a to 1d), and at least one connecting unit (2a, 2b) for connecting the multiway valves (1a to 1d) with electric and/or pneumatic sources,
**characterized in that**, a label area (8) is arranged at the housing (9) of said connecting unit (2a, 2b), the label area (8) comprises at least one through-going opening (10) shaped as a character, a symbol and/or a sign, wherein said opening (10) correspond with the at least one inner exhaust channel (12) for discharging air to the atmosphere.

2. A pneumatic valve bank according to claim 1,
**characterized in that** the label area (8) is arranged at a cover plate (13) as a part of the housing (9) which is attached to the housing (9).

3. A pneumatic valve bank according to claim 1 or 2,
**characterized in that** a built-in silencer element (15) is arranged next to the label area (8) in order to absorb the noise caused by the discharging air.

4. A pneumatic valve bank according to one of the preceding claims,
**characterized in that** the through-going openings (10) of the label area (8) form a logotype of the manufacturer or retailer.

5. A pneumatic valve bank according to claim 1,
**characterized in that** the connecting unit (2a, 2b) is an electronical control unit.

6. A pneumatic valve bank according to claim 1,
**characterized in that** the connecting unit (2a, 2b) is an air pipe connecting box.

7. A pneumatic valve bank according to claim 1,
**characterized in that** the connecting unit (2b) is arranged on at least one front side of the valve bank.

8. A pneumatic valve bank according to claim 1,
**characterized in that** the multiway valves (1a to 1d) are connected to one another in order to form at least one common supply channel (11) and at least one common exhaust channel (12a, 12b) extending lengthwise through the multiway valves (1a to 1d).

9. A pneumatic valve bank according to claim 1,
**characterized in that** the multiway valves (1a to 1d) are connected to a common or individual fluid manifolds comprising at least one supply channel and at least one exhaust channel extending lengthwise through the common fluid manifold or the individual fluid manifolds.

10. A pneumatic valve bank according to one of the preceding claims,
**characterized in that** the housing (9) of the connecting unit (2a, 2b) is made of plastics material formed by injection moulding.
